(19) Europäisches Patentamt European Patent Office Office européen des brevets

(11) **EP 1 729 354 B1**

(12) **FASCICULE DE BREVET EUROPEEN**

(45) Date de publication et mention de la délivrance du brevet:
**26.11.2008 Bulletin 2008/48**

(51) Int Cl.:
*H01L 41/09* (2006.01)   *H01L 41/04* (2006.01)
*F16D 65/14* (2006.01)

(21) Numéro de dépôt: **06114650.2**

(22) Date de dépôt: **29.05.2006**

(54) **Perfectionnement aux matériaux des cylindres des actionneurs à piston actif**

Verbesserung von Materialien der Zylinder von Aktoren mit aktivem Kolben

Improvement of materials of cylinders of actuators with active piston

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **01.06.2005 FR 0505551**

(43) Date de publication de la demande:
**06.12.2006 Bulletin 2006/49**

(73) Titulaire: **SAGEM Défense Sécurité**
**75015 Paris (FR)**

(72) Inventeurs:
• **D'Almeida, Oscar**
**92100 Boulogne Billancourt (FR)**
• **Woydt, Mathias**
**12203 Berlin (DE)**
• **Audren, Jean-Thierry**
**78470 Saint Rémy les Chevreuse (FR)**

(74) Mandataire: **Callon de Lamarck, Jean-Robert**
**Cabinet Regimbeau**
**20 rue de Chazelles**
**75847 Paris cedex 17 (FR)**

(56) Documents cités:
**FR-A- 2 790 618**   **FR-A- 2 819 468**
**US-B1- 6 313 568**

• **MITTAL R ET AL: "X-ray diffraction study of anisotropic thermal expansion in ZrMo2O8" JOURNAL OF APPLIED CRYSTALLOGRAPHY MUNKSGAARD INTERNATIONAL BOOKSELLERS & PUBLISHERS DENMARK, vol. 32, 1 octobre 1999 (1999-10-01), pages 1010-1011, XP009057958 ISSN: 0021-8898**
• **ALLEN S ET AL: "Structures and phase transitions of trigonal ZrMo2O8 and HfMo2O8" ACTA CRYSTALLOGRAPHICA, SECTION B (STRUCTURAL SCIENCE) MUNKSGAARD INTERNATIONAL BOOKSELLERS & PUBLISHERS DENMARK, vol. B60, février 2004 (2004-02), pages 32-40, XP002356721 ISSN: 0108-7681**
• **WALLEZ G ET AL: "Beta-zirconium oxide monophosphate: structural keys for an ultralow expansion material" CHEMISTRY OF MATERIALS AMERICAN CHEM. SOC USA, vol. 15, no. 20, 7 octobre 2003 (2003-10-07), pages 3793-3797, XP002356722 ISSN: 0897-4756**

EP 1 729 354 B1

**Description**

DOMAINE TECHNIQUE GENERAL ET ART ANTERIEUR

L'invention concerne les actionneurs à piston actif et notamment à piston en matériau piézo-électrique.

De tels actionneurs trouvent avantageusement applications pour les dispositifs de freinage ou les embrayages, notamment pour les véhicules automobiles ou les aéronefs.

Un actionneur à piston en matériau piézo-électrique a déjà été décrit dans FR 2 800 028.

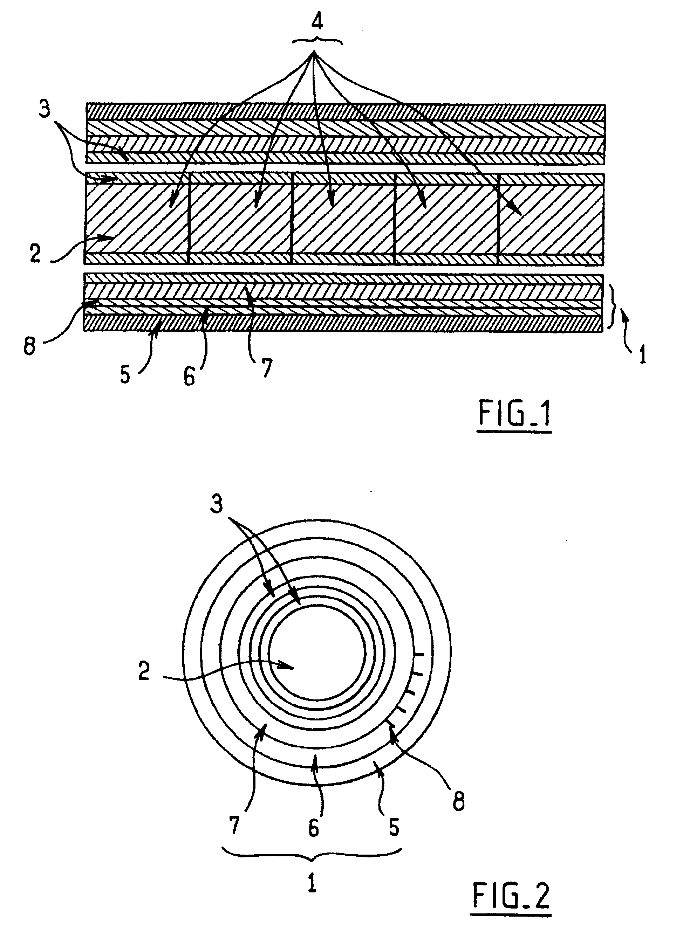

Un tel actionneur comporte ainsi qu'illustré sur la figure 1 un cylindre ou une chemise de coulissement 1 et un piston 2 apte à coulisser axialement dans ledit cylindre 1.

Le cylindre 1 est constitué de plusieurs cylindres emboîtés coaxialement les uns dans les autres: un cylindre extérieur 5, un cylindre intérieur 7 et un cylindre intermédiaire 6 qui s'étend entre le cylindre intérieur 7 et le cylindre extérieur 5, le piston 2 coulissant dans le cylindre intérieur 7.

Le cylindre 5 précontraint, en les serrant, le cylindre 7 et le cylindre intermédiaire 6. Ce cylindre intermédiaire 6 comporte des fentes radiales 8, représentées sur la figure 2, qui s'étendent à partir de génératrices du cylindre intérieur 7.

Le piston 2 est constitué d'une pluralité de tronçons de céramiques piézo-électriques 4. Chaque tronçon est pourvu d'électrodes (non représentées sur les figures 1 et 2) qui permettent de le commander indépendamment des autres. Chaque tronçon peut être en céramique multicouches ou en céramique massive.

Ces électrodes permettent de commander lesdits tronçons pour soit les dilater transversalement pour qu'ils se bloquent par frottement sur le cylindre 7, soit les allonger, les tronçons étant actionnés selon des séquences de fonctionnement alternant blocage et allongement de façon, soit à déplacer le piston, soit, lorsque celui-ci est en butée, à engendrer une force, qui est par exemple utilisée comme force de freinage.

Des couches formant couples de friction sont prévues sur les faces du piston 2 et du cylindre 7 pour assurer un frottement optimisé.

L'élongation électrique d'un élément piézo-électrique monocristal est de l'ordre de 1.4%. Celle d'un élément multicouche est égale à 0.1%. Par exemple, pour un élément de 25 mm, l'élongation électrique résultante pour un élément multicouche est de 9 $\mu$m environ. Cependant, la fabrication des éléments multicouches est beaucoup moins onéreuse et leur actionnement permet l'utilisation de tensions beaucoup moins élevées. Avec une fréquence de commande jusqu'à un ordre de grandeur de 40 kHz, on peut atteindre les même vitesses de déplacement de piston qu'avec un actionneur hydraulique.

Mais à cause de l'élongation très faible des éléments piézo-électriques, le contrôle du jeu entre la chemise de coulissement et le piston actif en matériau piézo-électrique est primordial. En effet, la force de blocage du piston 2 dans le cylindre 1 dépend principalement de quatre facteurs :

- le coefficient de frottement entre les deux pièces 1 et 2 recouvertes des couples de friction 3 ;
- la dilatation électrique du matériau piézo-électrique du piston 2 ;
- l'augmentation du jeu entre le cylindre 1 et le piston 2 due à l'usure de ces deux pièces ;
- les variations de la valeur du jeu entre le cylindre 1 et le piston 2 en fonction de la température du système.

Le dernier facteur montre que la maîtrise du jeu dans la fourchette de températures des applications de tels actionneurs, allant de -40°C (- 60°C pour les aéronefs) à 200°C ou 300°C voire plus, représente un enjeu important. Cette maîtrise détermine les caractéristiques fonctionnelles ainsi que le prix de l'actionneur.

Le matériau constitutif du piston actif a un coefficient de dilatation thermique qui possède une valeur atypique. Par conséquent, on doit pouvoir concevoir, avec des matériaux classiques, une pièce mécanique qui possède un coefficient de dilatation thermique compatible avec celui du matériau actif.

L'actionneur selon le document FR 2 800 028 propose de contrôler la valeur de ce jeu en fonction de la variation de la température en tirant parti des différentes valeurs des coefficients de dilatation des cylindres 5, 6 et 7.

A cet effet, le ou les matériaux des cylindres 5 et 7 sont choisis avec des coefficients de dilatation faibles, mais néanmoins algébriquement supérieurs à celui du piston 2. Le matériau du cylindre intermédiaire 6 est choisi avec un coefficient de dilatation supérieur aux coefficients des pièces 5 et 7.

Lorsque la température augmente, le piston actif se contracte légèrement. Le jeu entre la chemise et le piston augmente. Pour compenser cette augmentation, le cylindre 6 se dilate radialement, mais il est partiellement empêché par le cylindre 5 qui se dilate moins que lui. En conséquence, l'expansion extérieure interdite est reportée sur le cylindre 7 qui se trouve radialement comprimé.

Les fentes 8 de dilatation empêchent la formation de contraintes orthoradiales, qui empêcheraient toute expansion du cylindre 5 vers l'intérieur et la compression du cylindre 7.

On ajuste le coefficient de dilatation interne du cylindre 7 en jouant sur l'épaisseur du cylindre 5. Le contrôle du jeu entre le cylindre 1 et le piston actif 2 en fonction de la température est donc effectué par le choix des épaisseurs relatives des différents cylindres 5, 6 et 7.

Ces actionneurs présentent cependant des inconvénients. Leur conception, c'est-à-dire la détermination des différentes épaisseurs relatives, est difficile. En effet, le cylindre 1 est composé de trois cylindres, dont les épaisseurs sont autant de paramètres à prendre en compte dans la conception. De plus, leur fabrication est onéreuse et compliquée puisque aucun lubrifiant solide aux interfaces entre les cylindres ne facilite leurs glissements relatifs dus à la dilatation thermique et pour leur montage notamment.

FR 2 819 468 propose un actionneur dont le contrôle du jeu entre la chemise et le piston en fonction de la température est simplifié. FR 2 819 468 propose un actionneur comportant un cylindre fait d'un matériau cristallin avec une dilatation thermique négative. Ainsi, l'actionneur de FR 2 819 468 comporte un cylindre extérieur dans lequel le cylindre de coulissement est précontraint, l'un ou l'autre du cylindre extérieur et du cylindre de coulissement étant en matériau ayant un coefficient de dilatation thermique négatif ou sensiblement nul, l'autre cylindre ayant un coefficient de dilatation thermique positif.

Les matériaux cristallins présentés dans FR 2 819 468 pour un des cylindres possèdent un coefficient de dilatation thermique négatif isotrope ou proche de zéro. Ils sont choisis parmi un des matériaux suivants :

a. $ZrW_2O_8$, en phase $\alpha$ et/ou $\beta$,
b. $HfW_2O_8$,
c. $ZrV_2O_7$,
d. $YAlW_3O_{12}$,
e. $ZrP_{2-x}V_xO_7$, avec $0 \le x \le 2$ ; et
f. $SC_2(WO_4)_3$.

Ces actionneurs présentent cependant des inconvénients également, car ils sont limités dans leur domaine d'utilisation en pression et en température.

En effet, dans tous les cas d'utilisation de l'actionneur, les tensions hydrostatiques (ou mécaniques, selon le critère de von Mises, créées par les précontraintes des tubes) sur les matériaux à coefficient de dilatation négatif ne doivent pas excéder 200 MPa (soit 2.000 bar). Cette limitation en pression pour ces matériaux permet que la phase du matériau soit stable et ainsi évite une transition de phase. La transition de phase annulerait les propriétés de dilatation thermiques des matériaux. Or, en sollicitation mécanique dans un dispositif de freinage ou d'embrayage, 200 MPa sont vite atteints.

De plus, les températures d'utilisation sont également limitées pour éviter une transition de phase des matériaux utilisés. Le tableau 1 regroupe les caractéristiques en températures et en pressions de différents matériaux prévus dans FR 2 819 468.

La montée en température au-dessus des températures de stabilité de la dilatation thermique négative présentées dans le tableau 1 ne peut être négligée dans une application de freinage ou d'embrayage.

Les actionneurs de FR 2 819 468 ont donc des domaines de températures et de pressions d'utilisation limités, parfois incompatibles avec des utilisations dans des actionneurs de dispositif de freinage ou d'embrayage.

Le tableau 1

| Phases | Coefficient de dilatation $\alpha$ [ppm/K] | Domaine thermique de stabilité de la dilatation [°C] |
|---|---|---|
| $\alpha$-$ZrW_2O_8$ | -8,8 | de -273 à +155 |
| $\beta$-$ZrW_2O_8$ | -4,9 | de +155 à +780 (décomposition) |
| $YAlW_3O_{12}$ | -5/-7 | <+1100 |
| $ZrV_2O_7$ | 0 | de +150 à +700 |
| $ZrP_{2-x}V_xO_7$ | -6/-11,5 | <+100 |
| $Sc_2(WO_4)_3$ | -2,2 | de +263 à +520 |

De plus, en vue du dimensionnement des pièces (et notamment leur épaisseur radiale), une grande valeur absolue du coefficient de dilatation thermique négative est aussi importante qu'une stabilité thermique de la dilatation négative. Les matériaux de FR 2 819 468 ne présentent parfois pas de coefficient de dilatation thermique négative ayant une valeur absolue assez grande.

Enfin, l'actionneur de FR 2 819 468 possède deux cylindres, un cylindre présentant en utilisation une dilatation thermique négative et l'autre cylindre présentant une dilatation thermique positive. Le fait que le matériau d'un cylindre de FR 2 819 468 possède une dilatation thermique négative isotrope (c'est à dire selon l'ensemble des trois axes du matériau cristallin) et que l'autre cylindre soit en un matériau présentant une dilatation thermique positive isotrope fait qu'il existe un glissement relatif des cylindres, qui est important selon l'axe longitudinal de l'actionneur. Ce glissement relatif peut endommager les cylindres, et ce malgré la présence de lubrifiant solide entre les deux cylindres.

En effet, un autre élément de FR 2 819 468 est l'utilisation d'un lubrifiant solide pour assurer le glissement axial entre deux cylindres composant l'actionneur, un cylindre présentant en utilisation une dilatation thermique négative et l'autre cylindre présentant une dilatation thermique positive.

Les lubrifiants solides présentés dans FR 2 819 468 sont choisis parmi :

- le nitrure de bore hexagonal,
- le $MoS_2$,
- le $WSe_2$,
- le $WS_2$,
- le graphite intercalé avec des substances connues de l'homme de métier,
- le graphite non intercalé,
- le sulfure d'étain (sous ses formes $SnS$, $SnS_2$, $Sn_3S_4$), et
- le fluorure de Cerium ($CeF_3$), ou
- un quelconque mélange de ces matériaux.

Dans une application de freinage ou d'embrayage, il s'avère qu'en vue de longues garanties de l'équipement avionique et/ou automobile, l'action de l'eau, de l'humidité et de la vapeur contre les lubrifiants solides devient un nouveau critère à prendre en compte. Or les chalcogénides présentés dans FR 2 819 468, notamment les sulfures et les sélénides, réagissent avec l'eau et perdent leur caractère lubrifiant intrinsèque, ce qui limite l'utilisation de l'actionneur.

PRESENTATION DE L'INVENTION

Un but de l'invention est de proposer un actionneur résolvant au moins un des inconvénients précités.

A cet effet, l'invention propose un actionneur comportant un piston linéaire en matériau actif et un cylindre intérieur de coulissement, le piston linéaire en matériau actif comportant une pluralité de tronçons aptes à être commandés pour être dilatés de façon à se bloquer dans le cylindre de coulissement et/ou pour être allongés à l'intérieur du cylindre de coulissement de façon à ce que le piston se déplace en frottement à sec axialement dans le cylindre de coulissement, comportant un cylindre extérieur dans lequel ledit cylindre de coulissement est précontraint, l'un ou l'autre du cylindre extérieur et du cylindre de coulissement étant en matériau anisotrope présentant une dilatation thermique négative ou sensiblement nulle selon au moins un axe et une dilatation thermique positive ou sensiblement nulle sur au moins un autre axe, l'autre cylindre ayant un coefficient de dilatation thermique positif ou sensiblement nul.

L'invention est avantageusement complétée par les caractéristiques suivantes, prises seules ou selon leurs combinaisons possibles :

- l'axe de dilatation positive du matériau anisotrope est dirigé selon un axe de déplacement du piston dans le cylindre de coulissement ;
- le cylindre en matériau anisotrope est le cylindre de coulissement, le cylindre extérieur étant en un matériau à coefficient de dilatation positif ou sensiblement nul ;
- le cylindre en matériau anisotrope est le cylindre extérieur, le cylindre de coulissement étant en un matériau à coefficient de dilatation positif ou sensiblement nul ;
- le matériau du cylindre ayant un coefficient de dilatation thermique négatif ou sensiblement nul selon au moins un axe est un des matériaux suivants :

    - du $\alpha$-$ZrMo_2O_8$ en structure trigonale,
    - du $HfMo_2O_8$,
    - du $\beta$-$(Zr_2O)(PO_4)_2$;

ou un quelconque composite de ces matériaux.

- l'actionneur comporte au moins une couche de lubrifiant solide à l'interface entre le cylindre extérieur et le cylindre de coulissement ;
- le lubrifiant solide est du fluorure de graphite $(CF_x)_n$, où x est un nombre réel qui représente le degré de fluoruration et n un nombre entier qui représente le degré de polymérisation ;
- le lubrifiant solide est :

- le nitrure de bore hexagonal,
- le $MoS_2$,
- le $WSe_2$,
- le $WS_2$,
- le graphite intercalé ou non intercalé,
- le sulfure d'étain (sous ses formes SnS, $SnS_2$, $Sn_3S_4$), et
- le fluorure de Cerium ($CeF_3$), ou
- un quelconque mélange de ces matériaux.

- le cylindre extérieur comporte des excroissances externes s'étendant radialement audit cylindre ;
- l'un des deux cylindres comporte une ou plusieurs fentes, s'étendant radialement et longitudinalement dans le cylindre.

L'invention présente de nombreux avantages.

Notamment, l'actionneur présente de meilleures performances et une durée de vie augmentée du fait des coefficients de dilation négatifs plus importants et de la stabilité du caractère lubrificateur intrinsèque du lubrifiant solide sur des plages de températures plus grandes et des conditions d'utilisation plus humides (eau ou vapeur).

L'actionneur peut être utilisé sur des gammes de températures et de pressions plus larges et plus élevées, pendant plus de temps.

Le glissement relatif des cylindres selon l'axe longitudinal de l'actionneur est réduit.

PRESENTATION DES FIGURES

D'autres caractéristiques et avantages de l'invention ressortiront de la description qui suit, qui est purement illustrative et non limitative. Elle doit être lue en regard des dessins annexés sur lesquels :

- la figure 1, déjà commentée, est une coupe longitudinale d'un mode de réalisation de l'actionneur selon FR 2 800 028 ;
- la figure 2, déjà commentée, est une coupe transverse d'un mode de réalisation de l'actionneur selon FR 2 800 028 ;
- la figure 3 est une coupe transverse d'un premier mode de réalisation préféré de l'actionneur selon l'invention ;
- la figure 4 est une coupe longitudinale d'un premier mode de réalisation préféré selon l'invention ;
- la figure 5 est une coupe transversale d'une variante d'un premier mode de réalisation de l'actionneur selon l'invention ;
- la figure 6 est une représentation en coupe transversale d'un deuxième mode de réalisation préféré de l'actionneur selon l'invention ;
- la figure 7 est une vue longitudinale comportant une partie en coupe d'un deuxième mode de réalisation préféré de l'actionneur selon l'invention ;
- la figure 8 est une représentation d'une coupe transverse d'un troisième mode de réalisation de l'actionneur selon l'invention ;
- la figure 9 est une coupe longitudinale d'un troisième mode de réalisation de l'actionneur selon l'invention.

La structure générale des actionneurs selon l'invention est similaire à celle de l'actionneur selon le document FR 2 800 028. On décrit ci-dessous trois modes de réalisations préférés.

PREMIER EXEMPLE DE REALISATION

DESCRIPTION

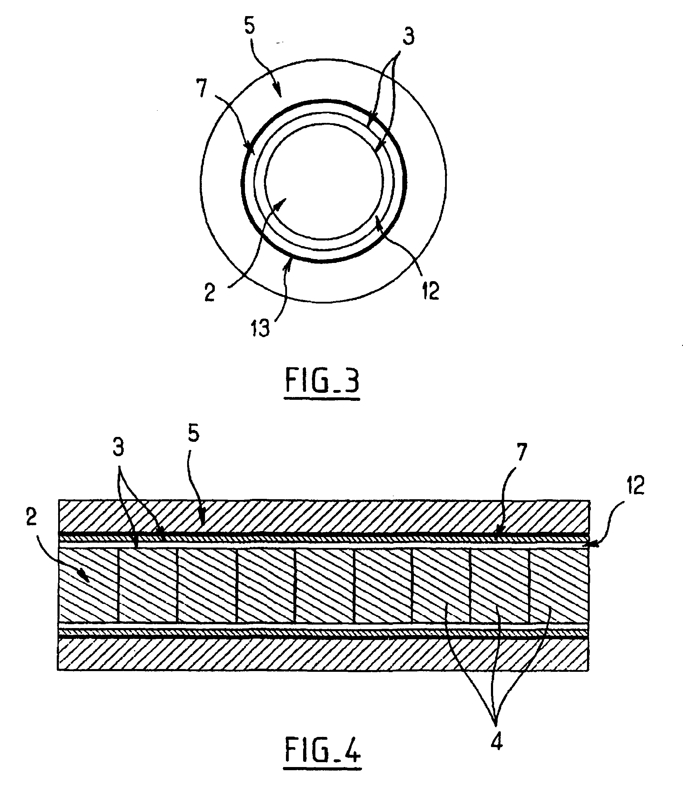

L'actionneur qui est représenté sur les figures 3 et 4 comporte un cylindre extérieur 5, dont le matériau a un coefficient de dilatation thermique positif et un piston actif 2 en matériau piézo-électrique coulissant dans un cylindre intérieur 7 de coulissement. Le cylindre 7 est inséré en force dans le cylindre 5. Il subit par conséquent une précontrainte, qui le maintient solidement dans son cylindre de support 5.

Le diamètre intérieur du cylindre 7 est par exemple égal à 25 mm, le diamètre extérieur du cylindre 5 est par exemple égal à 60 mm. La longueur des cylindres 5 et 7 est égale à la course du piston que l'utilisateur désire obtenir augmentée de la longueur du piston.

Le coefficient de dilatation thermique du piston actif est négatif et faible. Il est de l'ordre de -2ppm/K. La longueur du piston actif 2 est par exemple égale à 50 mm.

Le cylindre intérieur 7 est en matériau anisotrope présentant une dilatation thermique négative ou sensiblement nulle selon au moins un axe et une dilatation thermique positive ou sensiblement nulle sur au moins un autre axe.

Les matériaux du cylindre 7 sont préférentiellement choisis parmi :

- du $\alpha$-ZrMo$_2$O$_8$ en structure trigonale,
- du HfMo$_2$O$_8$,
- du $\beta$-(Zr$_2$O)(PO$_4$)$_2$ ;

ou un quelconque composite de ces matériaux.

Le tableau 2 reprend les valeurs des coefficients négatifs de dilatation thermique selon les trois axes cristallographiques $\alpha_a$ , $\alpha_b$ , $\alpha_c$ pour les matériaux possibles pour le cylindre 7.

Tableau 2

| Phase | | $\alpha_a$ [ppm/K] | $\alpha_b$ [ppm/K] | $\alpha_c$ [ppm/K] |
|---|---|---|---|---|
| $\beta$-(Zr$_2$O)(PO$_4$)$_2$ | | 3,9 | -3,6 | 4,3 |
| $\alpha$-ZrMo$_2$O$_8$ | <167°C | -2,8 | -2,8 | 59,6 |
| | <647°C | -6,3 | -6,3 | 26,9 |
| HfMo$_2$O$_8$ | <167°C | -1,7 | -1,7 | 58,7 |
| | <647°C | -6,4 | -6,4 | 39,2 |

Le $\alpha$-ZrMo$_2$O$_8$ en structure trigonale et le HfMo$_2$O$_8$ présentent des dilatations négatives selon les axes $\alpha_a$ et $\alpha_b$. Ils possèdent des coefficients de dilatation positive selon l'axe $\alpha_c$.

Le ZrMo$_2$O$_8$ existe en plusieurs polymorphes ($\alpha$-, $\beta$-, $\gamma$-). Il reste en structure cubique ($\gamma$-ZrMo$_2$O$_8$) stable jusqu'une tension hydrostatique de 600 MPa et une température de 390°C. Au-delà de cette température et de cette pression, il se transforme en $\beta$-ZrMo$_2$O$_8$ en structure monocline. Les dilatations thermiques selon les axes cristallographiques $\alpha_a$ et $\alpha_b$ du $\alpha$-ZrMo$_2$O$_8$ sont valables entre -256°C et +167°C. Elles ont une valeur de -2,8 ppm/K et augmentent entre 167°C et 647°C pour prendre une valeur de -6,3 ppm/K.

Les dilatations thermiques selon les axes cristallographiques $\alpha_a$ et $\alpha_b$ du HfMo$_2$O$_8$ sont valables entre -256°C et +167°C. Elles ont une valeur de - 1,7 ppm/K et augmentent aussi entre 167°C et 647°C pour prendre une valeur de -6,4 ppm/K.

Le bêta-monophosphate d'oxyde de zirconium $\beta$-(Zr$_2$O)(PO$_4$)$_2$ présente aussi une dilatation thermique négative seulement selon un axe cristallographique entre 22°C et 1000°C. Cette dilatation négative a une valeur de -3,6 ppm/K.

Comme il sera plus apparent dans la suite de la présente description, une orientation des cristaux est nécessaire pour avoir un fonctionnement optimal de l'actionneur. Une dilatation positive axiale est souhaitée pour être cohérente avec les métaux environnants, et une dilatation négative radiale est souhaitée pour être cohérente avec les matériaux piézoélectriques actifs.

Le matériau du cylindre 7 possède au moins un axe selon lequel la dilatation thermique est négative. Or, pour un bon fonctionnement de l'actionneur, la dilatation négative doit être orientée radialement. Cela peut seulement être obtenu par une orientation radiale préférée des grains du matériau dans le matériau du cylindre.

Le matériau du cylindre 7 possède au moins un axe selon lequel la dilatation thermique est positive. Or, pour un bon fonctionnement de l'actionneur, la dilatation positive doit être orientée longitudinalement. L'axe de dilatation positive du matériau anisotrope est dirigé selon un axe de déplacement du piston 2 dans le cylindre de coulissement 7. Dans le cas où la dilatation est positive selon deux axes, la résultante de dilatation sur les deux axes doit être orientée longitudinalement par rapport à l'actionneur. On obtient ce résultat en contrôlant l'orientation des grains dans le matériau.

Comme le montrent les figures 3 et 4, le piston 2 et le cylindre intérieur 7 sont séparés par un jeu 12.

Des couples de friction 3 entre le piston 2 et le cylindre intérieur 7 recouvrent totalement ou en partie le cylindre 7 et le piston 2, et engendrent entre ces deux éléments une force de frottement élevée. De tels couples sont connus de l'homme du métier et ne sont pas décrits plus en détail dans la suite de la présente description.

La figure 4 montre que le piston 2 comporte de la même façon que celui décrit dans le document FR 2 800 028 une pluralité de tronçons 4. Les tronçons 4 du piston 2 sont par exemple des cylindres ou disques multicouches de 25 mm de diamètre et d'une épaisseur de 15 à 20 mm environ. Préférentiellement, le piston actif possède trois tronçons. Des tensions de commande appliquées sur des électrodes (non représentées sur les figures 3 et 4) dont sont munis les tronçons permettent de dilater radialement ou d'allonger lesdits tronçons piézo-électriques.

La force de frottement engendrée par les couples de friction 3 permet à certains tronçons de se bloquer contre le cylindre 7 lorsqu'ils sont dilatés radialement et à d'autres de s'allonger dans le cylindre 7 en prenant appui sur un tronçon bloqué pour engendrer une force qui pourra actionner le dispositif de freinage par exemple.

Dans le mode de réalisation préféré représenté sur les figures 3 et 4, l'interface entre le cylindre intérieur 7 et le cylindre extérieur 5 présente une couche de lubrifiant solide 13.

Dans une variante de ce mode de réalisation selon l'invention, le lubrifiant solide est présent dans le/les matériau (x) du/des cylindre(s) interieur 7 et/ou exterieur 5.

Avantageusement, ce lubrifiant solide est :

- le nitrure de bore hexagonal,
- le $MoS_2$,
- le $WSe_2$,
- le $WS_2$,
- le graphite intercalé avec des substances connues de l'homme de métier,
- le graphite non intercalé,
- le sulfure d'étain (sous ses formes $SnS$, $SnS_2$, $Sn_3S_4$), et
- le fluorure de Cerium ($CeF_3$), ou
- un quelconque mélange de ces matériaux, cette liste ne se voulant aucunement exhaustive.

Très préférentiellement, le lubrifiant solide est du fluorure de graphite $(CF_x)_n$, où x est un nombre réel qui représente le degré de fluoruration et n un nombre entier qui représente le degré de polymérisation. Le fluorure de graphite (« Fluorinated Carbon » en anglais) est également parfois appelé le polymonofluorure de carbone. Préférentiellement, le fluorure de graphite $CF_x$ où x est compris entre 0,8-1,2 (CAS: 51311-17-2), possède une structure hexagonale lamellaire. Le caractère lubrificateur intrinsèque devient maximale pour un $x\sim1,0$-$1,1$. Avec un angle de mouillage de $\Theta\sim143°$, le $CF_x$ ne mouille pas l'eau. Il ne présente aucune réaction hydrolytique avec l'eau. La stabilité thermique du CFx se situe, en fonction du degré de fluoruration x, entre des températures comprises entre 380°C et 630°C.

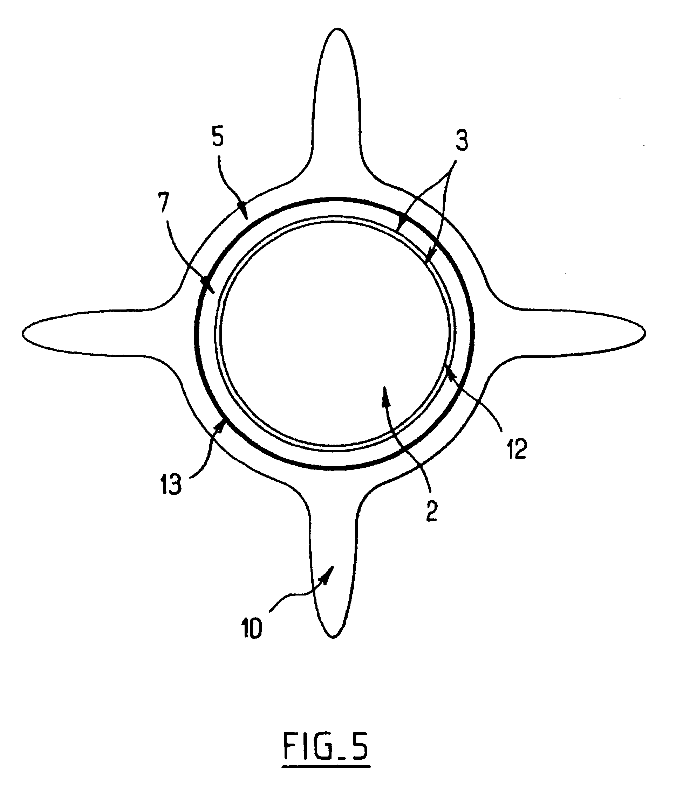

Dans le mode de réalisation préféré représenté sur les figures 3 et 4, le cylindre extérieur est de contour circulaire. Cependant, dans une variante de ce mode de réalisation, représentée sur la figure 5, le cylindre extérieur 5 peut présenter des moyens de support et de rigidité 10 matérialisés par une ou plusieurs excroissances de matière s'étendant radialement au cylindre 5. Ces excroissances 10 de matière sont préférentiellement de forme oblongue.

Le cylindre 5 améliore les performances de ténacité et de résistance à la flexion de l'ensemble cylindre intérieur 7 - cylindre extérieur 5.

On l'a dit, le cylindre intérieur 7 est monté en force dans le cylindre extérieur 5. Cette précontrainte engendre une déformation élastique du cylindre intérieur 7. Le cylindre 7 est élastiquement rétracté à température ambiante.

PRINCIPE DE FONCTIONNEMENT

Au repos ou à basse température, le piston 2 et le cylindre intérieur 7 sont séparés par un jeu 12 déterminé pour un bon fonctionnement de l'actionneur, typiquement de 2 à 3 $\mu$m.

La température de l'actionneur augmente, notamment avec la température de son environnement. Le piston actif piézo-électrique 2 se contracte alors selon son coefficient de dilatation négatif - environ égal à - 2ppm/K.

Comme le cylindre intérieur 7 présente un coefficient de dilatation thermique négatif radialement qui est sensiblement supérieur en valeur absolue (de l'ordre de -8ppm/K), il se contracte également, mais de façon plus importante. Par conséquent, monté seul, il réduirait à zéro le jeu entre le piston 2 et lui-même et bloquerait l'actionneur.

Le cylindre extérieur 5 va permettre de compenser cette contraction trop importante et empêcher que le cylindre intérieur 7 ne bloque le piston actif 2.

Le cylindre intérieur 7 est élastiquement contracté par la précontrainte exercée par le cylindre extérieur 5, qui lui possède un coefficient de dilatation positif ou proche de zéro, comme l'alliage invar par exemple. Par coefficient de dilatation thermique sensiblement égal à zéro, il faut entendre un coefficient dont la valeur est inférieure, en valeur absolue, à 2ppm/K.

Lorsque le cylindre extérieur 5 se dilate lors du fonctionnement de l'actionneur, il relâche progressivement la précontrainte qu'il exerçait sur le cylindre intérieur 7. Le cylindre intérieur 7, qui d'une part se contracte radialement du fait de son coefficient de dilatation thermique négatif selon cet axe, se dilate d'autre part du fait du relâchement de la précontrainte exercée par le cylindre externe 5.

Les deux effets se compensent suffisamment pour que le jeu 12 initial reste constant tout au long du fonctionnement de l'actionneur.

Par contre, le cylindre intérieur 7 se dilate longitudinalement du fait de son coefficient de dilatation thermique positif selon cet axe. Comme le cylindre extérieur 5 se dilate également selon cet axe, le glissement relatif du cylindre 5 et du cylindre 7 est réduit, ce qui minimise l'usure des pièces et ce qui garantit une plus grande durée de vie et une plus grande sécurité de l'actionneur.

On comprend que la dilatation longitudinale des cylindres 5 et 7 s'effectue dans le même sens, du fait que les deux cylindres ont une dilatation thermique positive selon l'axe longitudinal de l'actionneur.

Un exemple numérique est donné ci-dessous pour la dilatation radiale.

Si on appelle $K_7$ la raideur du cylindre intérieur 7 qui définit le rapport entre la contrainte extérieure, comptée positivement du cylindre extérieur 5 au cylindre intérieur 7, et une variation $\Delta r_7$ du rayon $r_7$ du cylindre intérieur 7, on peut écrire la contrainte de compression $\sigma_7$ :

$$\sigma_7 = \sigma_0 + K_7\,\Delta r_7$$

avec $\sigma_0$ la précontrainte pour $\Delta r = 0$.

De même, pour le cylindre extérieur 5, la contrainte de compression $\sigma_5$, comptée positivement du cylindre intérieur 7 au cylindre extérieur 5, s'écrit :

$$\sigma_5 = \sigma_0 - K_5\,\Delta r_5$$

le signe - montre que la contrainte subie par le cylindre extérieur 5 diminue quand l'interface entre les cylindres 5 et 7 se déplace vers le cylindre intérieur 7.

En première approximation, l'interface entre les deux cylindres se déplace radialement en fonction de la température de la distance d :

$$d = \alpha_p\,\Delta\vartheta$$

avec $\alpha_p$ égal au coefficient de dilatation du matériau piézo-électrique ;
et $\Delta\vartheta$ égal à la variation de température.

On a donc :

$$\Delta r_7 = (\alpha_7 - \alpha_p)\,\Delta\vartheta$$

$$\Delta r_5 = (\alpha_5 - \alpha_p)\,\Delta\vartheta$$

avec $\alpha_7$ et $\alpha_5$ les coefficients de dilatation thermique radiale du cylindre intérieur 7 et du cylindre extérieur 5 respectivement.

Le système cylindre intérieur 7-cylindre extérieur 5 est en équilibre. Par conséquent, on a :

$$\sigma_7 = \sigma_5 \quad ,$$

ce qui donne si $\sigma_7$ et $\sigma_5$ restent toujours positives, c'est-à-dire que la précontrainte initiale $\sigma_0$ est suffisante° :

$$\sigma_0 + K_7\,(\alpha_7 - \alpha_p)\,\Delta\vartheta = \sigma_0 - K_5\,(\alpha_5 - \alpha_p)\,\Delta\vartheta.$$

On a donc la relation **E** :

$$\{E\} \qquad K_7\,(\alpha_7 - \alpha_p) + K_5\,(\alpha_5 - \alpha_p) = 0$$

Par ailleurs, la raideur K de l'ensemble des deux cylindres précontraints est :

$$K = K_7 + K_5$$

On cherche, dans la conception de l'actionneur, à maximiser K. En effet, le piston actif doit s'appuyer sur quelque chose de rigide pour pouvoir fonctionner correctement.

Les matériaux ayant un coefficient de dilatation positif possèdent une plus grande raideur que les matériaux à coefficients de dilatation thermique négatifs. C'est le cas notamment des matériaux dérivés de l'acier par exemple, qui possèdent une grande rigidité.

Dans l'exemple ci-dessus,

$\alpha_7$ est négatif,
$\alpha_5$ est positif, et
$K_7 \leq K_5$.

On choisira des matériaux à faibles coefficients de dilatation thermique ($\alpha_7$ et $\alpha_5$ proches de $\alpha_p$) afin de pouvoir choisir des raideurs $K_5$ et $K_7$ aussi grandes que possibles afin de rigidifier l'ensemble des deux cylindres, mais de telle sorte que la relation **E** soit toujours vérifiée.

On pourra ainsi avantageusement utiliser l'invar, qui possède un coefficient de dilatation thermique positif et faible (de l'ordre de 1 ppm/K), et une grande raideur puisque qu'il est de composition métallique.

Par ailleurs, la relation **E** ainsi que la relation :

$$\sigma = E \, \varepsilon,$$

liant le module d'Young E, la déformation élastique $\varepsilon$ et la contrainte $\sigma$ dans le matériau, permettent à l'homme de métier de déterminer la précontrainte initiale $\sigma_0$ à appliquer aux cylindres, les déformation élastiques dues aux contraintes, ainsi que les déformations dues aux changements de températures.

Dans tous les cas, les contraintes sur le matériau à au moins un coefficient de dilatation thermique négatif, qui ne devaient pas excéder 200 MPa pour que la phase du matériaux soit stable dans l'actionneur de FR 2 819 468, peuvent maintenant atteindre 600 MPa environ. Le domaine d'utilisation de l'actionneur est dont élargi par rapport à l'art antérieur.

Si le matériau à coefficient de dilatation positive est à l'extérieur, la précontrainte se relâche progressivement lorsque la température augmente. Il faut donc que cette précontrainte maximale soit exercée à la température minimale (-40°C ou -60°C par exemple).

La précontrainte est maximale à -40°C ou -60°C ; et à 200°C, cette précontrainte sera sensiblement nulle. C'est pourquoi le cylindre 5 peut être avantageusement monté avec une faible précontrainte à +200°C.

Grâce à la compensation de la contraction thermique du cylindre 7 par sa dilatation élastique due à la dilatation thermique du cylindre 5, la valeur du jeu 12 entre le piston actif 2 et le cylindre intérieur 7 reste donc quasiment inchangée quelle que soit la température environnante.

La dilatation du cylindre 5 et la contraction radiale simultanée du cylindre 7 engendrent un glissement relatif des deux pièces. La présence de la couche de lubrifiant solide 13 (matériaux déjà mentionnés plus haut) à l'interface entre ces deux pièces permet de faciliter ce glissement. Cette couche de lubrifiant a une épaisseur de 0.1 $\mu$m à 5 $\mu$m, mais préférentiellement de 0.3 $\mu$m à 1 $\mu$m. La présence de cette couche permet également de faciliter le montage en force du cylindre 7 dans le cylindre 5.

Un autre mode de réalisation prévoit que ce lubrifiant 13 est contenu dans le matériau du cylindre extérieur 5 et/ou dans le matériau du cylindre intérieur 7.

Ce contrôle du jeu se fait plus simplement que dans l'art antérieur décrit dans le document FR 2 800 028, car le nombre de pièces dont il faut contrôler la dilatation est plus réduit. De plus, dans ce premier mode de réalisation préféré, les cylindres ne présentent pas de fentes de dilatation comme dans l'actionneur selon le document FR 2 800 028.

Les pièces sont moins sollicitées en contraintes car ces dernières ne s'exercent qu'à l'interface des pièces 5 et 7. De plus, la dilatation du cylindre 7 longitudinalement diminue le glissement relatif des cylindres 5 et 7 selon cet axe.

Enfin, le glissement relatif des pièces est facilité par la présence du lubrifiant solide 13, contrairement aux actionneurs décrits dans l'état de l'art.

Par conséquent, pour toutes ces raisons, la durée de vie et la sécurité de l'actionneur s'en trouvent allongées ou augmentées.

DEUXIEME EXEMPLE DE REALISATION

DESCRIPTION

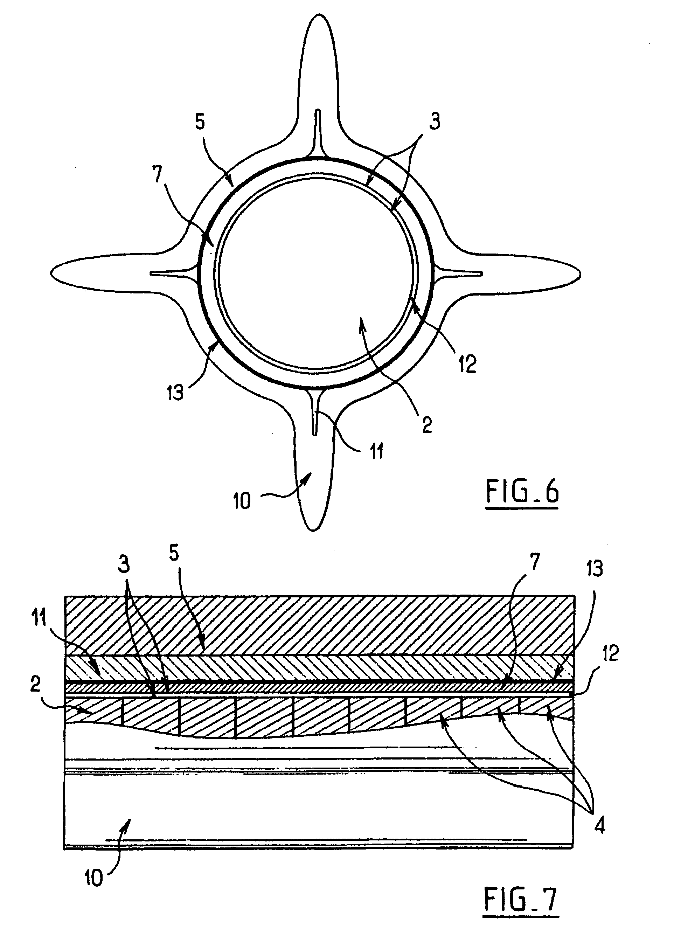

Un deuxième mode de réalisation, dont la structure est similaire à celle du premier mode de réalisation, est représenté en coupe transversale sur la figure 6 et en coupe longitudinale sur la figure 7. Les numéros des pièces sur ces figures sont similaires à ceux des figures 3, 4 et 5 pour traduire la similarité des composants du deuxième mode de réalisation.

Les matériaux du cylindre possédant au moins un coefficient de dilatation négative sont les même que pour le premier mode de réalisation, et le lubrifiant solide est également le même que pour le premier mode de réalisation.

Sur les figures 6 et 7, le cylindre 5 présente des moyens de support et de rigidité 10 matérialisés par une ou plusieurs excroissances de matière s'étendant radialement au cylindre 5. Cependant, on pourrait tout à fait considérer un cylindre 5 de contour circulaire dans les développements qui suivent et rester dans un actionneur selon l'invention.

Dans ce deuxième mode de réalisation, le cylindre 5 présente une ou plusieurs fentes de dilatation 11. Ces fentes 11 sont radiales et s'étendent à partir de génératrices du cylindre intérieur 7. Chaque fente 11 s'étend dans les directions radiale et longitudinale, dans les parties de faible épaisseur du cylindre 5 et/ou préférentiellement dans les excroissances 10. L'extension longitudinale s'effectue préférentiellement sur la longueur du cylindre.

PRINCIPE DE FONCTIONNEMENT

Le principe de fonctionnement de ce deuxième mode de réalisation est similaire à celui du premier mode de réalisation décrit précédemment. Ce deuxième mode de réalisation sera préféré dans le cas où le cylindre extérieur 5 est construit en un matériau qui présente des déformations élastiques faibles. Les fentes 11 vont donc augmenter les possibilités d'élongation du cylindre 5.

Il faut cependant noter que ce deuxième mode de réalisation sera préféré uniquement en cas de problèmes d'élongation du cylindre 5 car les fentes 11 diminuent la raideur K du système cylindre intérieur 7 - cylindre extérieur 5.

Lors du fonctionnement de l'actionneur ou de la montée en température, le cylindre extérieur 5, ayant un coefficient de dilatation thermique positif, va se dilater. En même temps qu'il a tendance à se dilater radialement pour compenser la contraction du cylindre 7 comme dans le premier mode de réalisation, il se dilate circonférentiellement et resserre les fentes 11 de dilatation, ce qui a pour effet de limiter sa dilatation radiale.

TROISIEME EXEMPLE DE REALISATION

DESCRIPTION

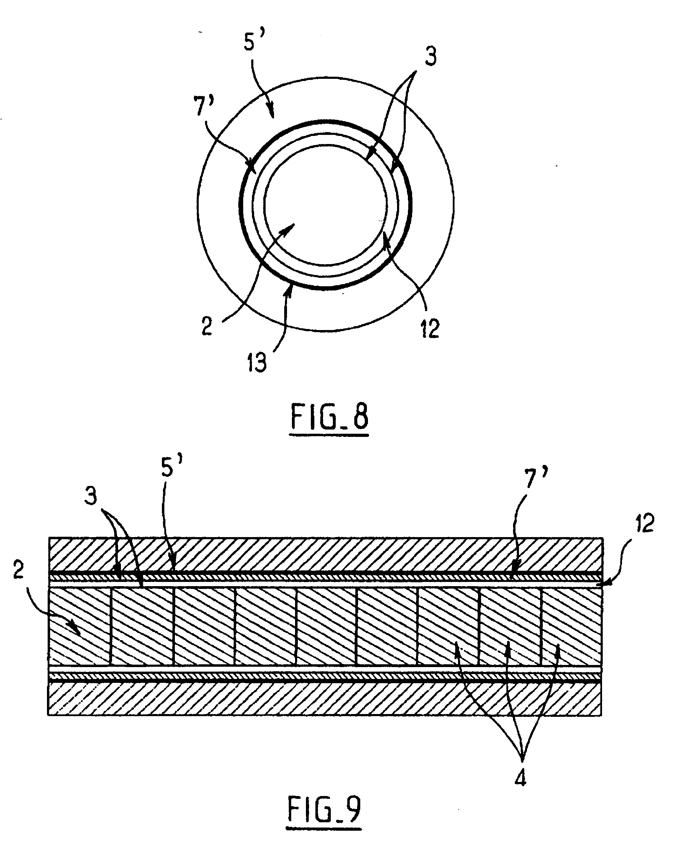

Le troisième mode de réalisation, représenté sur les figures 8 et 9, possède la même structure que le premier mode de réalisation des figures 3 et 4 et une numérotation similaire des composants reflète cette similarité.

La grande différence est que le cylindre extérieur 5' est en un matériau possédant au moins un coefficient de dilatation thermique négatif, et que le cylindre intérieur 7' possède un coefficient de dilatation thermique positif ou proche de zéro (inférieur à 2 ppm/K en valeur absolue par exemple).

Cependant, les matériaux du cylindre possédant au moins un coefficient de dilatation négative sont les mêmes que pour le premier mode de réalisation, et le lubrifiant solide est également le même que pour le premier mode de réalisation.

Le piston actif en matériau piézo-électrique 2 et le cylindre intérieur 7 sont séparés par un jeu 12. Les couples de friction 3, connus de l'homme du métier, recouvrent totalement ou en partie le cylindre 7 et le piston 2 et engendrent entre ces deux éléments une force de frottement élevée.

La figure 9 montre que le piston 2 comporte de la même façon que dans le document FR 2 800 028 une pluralité de tronçons 4. Les tronçons 4 du piston 2 sont de même des cylindres ou disques multicouches de 25 mm diamètre et d'une épaisseur de 15 à 20 mm.

Une couche de lubrifiant solide est présente à l'interface entre le cylindre externe 5' et le cylindre intérieur 7'.

Dans un autre mode de réalisation, ce lubrifiant solide pourra être inclus dans le/les matériau(x) des cylindres 5' et/ou 7'.

On comprends que le cylindre 5' se dilate axialement et se contracte radialement lorsque la température augmente. Le cylindre 7' se dilate selon tous les axes.

Dans ce mode de réalisation, on définit une relation selon l'axe radial E' par :

$$\{E'\} \qquad K_{7'} \, (\alpha_{7'} - \alpha_p) + K_{5'} \, (\alpha_{5'} - \alpha_p) = 0$$

avec $\alpha_{7'}$, $\alpha_{5'}$ et K7', K5' les coefficients de dilatation thermique et les raideurs du cylindre intérieur 7' et du cylindre extérieur 5' respectivement.

On alors dans ce cas :

$\alpha_{7'}$ est positif,
$\alpha_{5'}$ est négatif, et
$K_{7'} \geq K_{5'}$.

PRINCIPE DE FONCTIONNEMENT

A basse température, le piston 2 et le cylindre 5' sont séparés par le jeu 12. Au fur et à mesure du fonctionnement de l'actionneur et lorsque la température environnante ou des pièces environnantes augmente, le piston 2 se contracte. Simultanément, le cylindre intérieur 7' a tendance à se dilater. La valeur du jeu 12 a donc tendance à augmenter.

Comme dans les modes de réalisation précédents, le cylindre extérieur 5' va compenser cet effet pour maintenir la valeur du jeu 12 quasi constante et assurer un bon fonctionnement de l'actionneur en se contractant radialement.

Le cylindre extérieur 5' possède un coefficient radial de dilatation thermique négatif. Par conséquent, il va se contracter et empêcher le cylindre 7' de se dilater. Comme le cylindre 7' ne se dilate plus, le jeu 12 reste constant.

La contrainte à l'interface entre le cylindre 5' et le cylindre 7' augmente au fur et à mesure que le cylindre intérieur 7' essaie de se dilater et que le cylindre externe 5' l'en empêche en se contractant. Par contre, la dilatation longitudinale des cylindres 5' et 7' est selon le même sens, ce qui diminue le glissement relatif et par conséquent l'usure des cylindres.

Ce mode de réalisation sera mis en oeuvre avec des cylindres de matériaux à coefficient de dilatation négatif qui supportent des tensions élevées s'exerçant sur leur diamètre interne. Ce n'est pas le cas de tous les matériaux à coefficient de dilatation négatif. Dans le cas où le matériau à au moins un coefficient de dilatation négatif présente une résistance à ces tensions trop faible, les premier et deuxième modes de réalisation seront préférés.

Dans tous les cas, les contraintes sur le matériau à au moins un coefficient de dilatation thermique négatif, qui ne devaient pas excéder 200 MPa pour que la phase du matériaux soit stable dans l'actionneur de FR 2 819 468, peuvent maintenant atteindre 600 MPa environ. Le domaine d'utilisation de l'actionneur est dont élargi par rapport à l'art antérieur.

En outre, de même que pour les modes de réalisation précédents, l'homme de métier peut concevoir des variantes à ce mode de réalisation préféré sans quitter le champ de l'invention.

Ces variantes sont par exemple la présence de moyens de support et de rigidité sous la forme d'excroissances externes sur le cylindre externe 5'. La présence de fentes de dilatation dans le cylindre intérieur 7' ou de rétractations dans le cylindre 5' ainsi que le dimensionnement de leur profondeur, permettent de résoudre les problèmes d'élongation insuffisante que présenterait le troisième mode de réalisation des figures 8 et 9.

Le terme cylindre utilisé dans tous les développements qui précèdent doit être entendu au sens large. Il désigne de façon générale toute forme définie par un ensemble de génératrices parallèles s'appuyant sur une même surface fermée.

Les actionneurs qui viennent d'être décrits sont avantageusement utilisés pour équiper des étriers de frein, et plus particulièrement des étriers de frein d'avions ou d'automobiles, les systèmes d'embrayage, ou les actionneurs de surfaces de contrôle.

**Revendications**

**1.** Actionneur comportant un piston linéaire (2) en matériau actif et un cylindre intérieur de coulissement (7, 7'), le piston linéaire en matériau actif comportant une pluralité de tronçons (4) aptes à être commandés pour être dilatés de façon à se bloquer dans le cylindre (7, 7') de coulissement et/ou pour être allongés à l'intérieur du cylindre (7, 7') de coulissement de façon à ce que le piston (2) se déplace en frottement à sec axialement dans le cylindre de coulissement (7, 7'),

comportent un cylindre (5, 5') extérieur dans lequel ledit cylindre de coulissement (7, 7') est précontraint, **caractérisé en ce que** l'un ou l'autre du cylindre extérieur (5, 5') et du cylindre de coulissement (7, 7') est en matériau anisotrope présentant une dilatation thermique négative ou sensiblement nulle selon au moins un axe et une dilatation thermique positive ou sensiblement nulle sur au moins un autre axe, l'autre cylindre ayant un coefficient de dilatation thermique positif ou sensiblement nul.

**2.** Actionneur selon la revendication 1, dans lequel l'axe de dilatation positive du matériau anisotrope est dirigé selon un axe de déplacement du piston (2) dans le cylindre de coulissement (7, 7').

**3.** Actionneur selon l'une des revendications 1 ou 2, dans lequel le cylindre en matériau anisotrope est le cylindre de coulissement (7, 7'), le cylindre extérieur (5, 5') étant en un matériau à coefficient de dilatation positif ou sensiblement nul.

**4.** Actionneur selon l'une des revendications 1 ou 2, dans lequel le cylindre en matériau anisotrope est le cylindre extérieur (5, 5'), le cylindre de coulissement (7, 7') étant en un matériau à coefficient de dilatation positif ou sensiblement nul.

**5.** Actionneur selon l'une des revendications précédentes, dans lequel le matériau du cylindre ayant un coefficient de dilatation thermique négatif ou sensiblement nul selon au moins un axe est un des matériaux suivants :

- du $\alpha$-ZrMo$_2$O$_8$ en structure trigonale,
- du HfMo$_2$O$_8$,
- du $\beta$-(Zr$_2$O)(PO$_4$)$_2$;

ou un quelconque composite de ces matériaux.

**6.** Actionneur selon l'une des revendications précédentes, comportant au moins une couche de lubrifiant solide (13) à l'interface entre le cylindre extérieur (5, 5') et le cylindre de coulissement (7, 7').

**7.** Actionneur selon la revendication précédente, dans lequel le lubrifiant solide est du fluorure de graphite (CF$_x$)$_n$, où x est un nombre réel qui représente le degré de fluoruration et n un nombre entier qui représente le degré de polymérisation.

**8.** Actionneur selon la revendication 6, dans lequel le lubrifiant solide est :

- le nitrure de bore hexagonal,
- le MoS$_2$,
- le WSe$_2$,
- le WS$_2$,
- le graphite intercalé ou non intercalé,
- le sulfure d'étain (sous ses formes SnS, SnS$_2$, Sn$_3$S$_4$), et
- le fluorure de Cerium (CeF$_3$), ou
- un quelconque mélange de ces matériaux.

**9.** Actionneur selon l'une des revendications précédentes, dans lequel le cylindre extérieur (5, 5') comporte des excroissances externes (10) s'étendant radialement audit cylindre (5, 5').

**10.** Actionneur l'une des revendications précédentes, dans lequel l'un des deux cylindres (5, 5'/7, 7') comporte une ou plusieurs fentes (11), s'étendant radialement et longitudinalement dans le cylindre.


**Claims**

**1.** An actuator including a linear piston (2) in an active material and an inner slide cylinder (7, 7'), the linear piston in an active material including a plurality of sections (4) capable of being controlled so as to expand and be blocked in the slide cylinder (7, 7') and/or to be lengthened inside the slide cylinder (7, 7') in such a way that the piston (2) moves axially in the slide cylinder (7, 7') with dry friction, including an outer cylinder (5, 5') in which said slide cylinder (7, 7') is prestressed, **characterized in that** either one of the outer cylinder (5, 5') and of the slide cylinder (7, 7') is in an anisotropic material having negative or substantially zero thermal expansion along at least one axis and positive or substantially zero thermal expansion on at least one other axis, the other cylinder having positive or substantially zero thermal expansion.

**2.** The actuator according to claim 1, wherein the positive expansion axis of the anisotropic material is oriented along a displacement axis of the piston (2) in the slide cylinder (7, 7').

**3.** The actuator according to any of claims 1 or 2, wherein the cylinder in an anisotropic material is the slide cylinder (7, 7'), the outer cylinder (5, 5') being in a material with a positive or substantially zero thermal expansion coefficient.

**4.** The actuator according to any of claims 1 or 2, wherein the cylinder in an anisotropic material is the outer cylinder (5, 5'), the slide cylinder (7, 7') being in a material with a positive or substantially zero thermal expansion coefficient.

**5.** The actuator according to any of the preceding claims, wherein the material of the cylinder with negative or substantially zero thermal expansion coefficient along at least one axis is one of the following materials:

- $\alpha$-$ZrMo_2O_8$ in a trigonal structure,
- $HfMo_2O_8$,
- $\beta$-$(Zr_2O)(PO_4)_2$ ;
  or any composite of these materials.

**6.** The actuator according to any of the preceding claims, including at least one solid lubricant layer (13) at the interface between the outer cylinder (5, 5') and the slide cylinder (7, 7').

**7.** The actuator according to the preceding claim, wherein the solid lubricant is graphite fluoride $(CF_x)_n$, where x is real number and n an integer which represents the degree of polymerization.

**8.** The actuator according to claim 6, wherein the solid lubricant is:

- hexagonal boron nitride,
- $MoS_2$,
- $WSe_2$,
- $WS_2$,
- intercalated or non-intercalated graphite
- tin sulphide (in its SnS, $SnS_2$, $Sn_3S_4$),
- cerium fluoride $(CeF_3)$ or
- any mixture of these materials.

**9.** The actuator according to any of the preceding claims, wherein the outer cylinder (5, 5') includes external protrusions (10) extending radially to said cylinder (5, 5').

**10.** The actuator according to any of the preceding claims, wherein one of the two cylinders (5, 5'/7, 7') includes one or more slots (11) extending radially and longitudinally in the cylinder.

**Patentansprüche**

**1.** Aktor, der einen Linearkolben (2) aus einem aktiven Material und einen inneren Führungszylinder (7, 7') umfasst, wobei der Linearkolben aus einem aktiven Material mehrere Abschnitte (4) umfasst, die dazu geeignet sind, betätigt zu werden, um derart ausgedehnt zu werden, dass sie sich in dem Führungszylinder (7, 7') blockieren, und/oder um sich im Inneren des Führungszylinder (7, 7') derart zu strecken, dass der Kolben (2) sich durch trockene Reibung axial im Führungszylinder (7, 7') verschiebt, wobei er einen äußeren Zylinder (5, 5') umfasst, in dem der Führungszylinder (7, 7') vorgespannt ist, **dadurch gekennzeichnet, dass** von dem äußeren Zylinder (5, 5') und dem Führungszylinder (7, 7') der eine oder der andere aus einem anisotropen Material ist, das eine Wärmeausdehnung hat, die entlang wenigstens einer Achse negativ oder im Wesentlichen Null ist, und eine Wärmeausdehnung hat, die auf wenigstens einer anderen Achse positiv oder im Wesentlichen Null ist, wobei der andere Zylinder einen Wärmeausdehnungskoeffizienten hat, der positiv oder im Wesentlichen Null ist.

**2.** Aktor gemäß Anspruch 1, bei dem die Achse der positiven Ausdehnung des anisotropen Materials entlang einer Achse der Verschiebung des Kolbens (2) in dem Führungszylinder (7, 7') ausgerichtet ist.

3. Aktor nach einem der Ansprüche 1 oder 2, bei dem der Zylinder aus anisotropem Material der Führungszylinder (7, 7') ist, wobei der äußere Zylinder (5, 5') aus einem Material mit einem Ausdehnungskoeffizienten besteht, der positiv oder im Wesentlichen Null ist.

4. Aktor nach einem der Ansprüche 1 oder 2, bei dem der Zylinder aus anisotropem Material der äußere Zylinder (5, 5') ist, wobei der Führungszylinder (7, 7') aus einem Material mit einem Ausdehnungskoeffizienten besteht, der positiv oder im Wesentlichen Null ist.

5. Aktor nach einem der vorhergehenden Ansprüche, bei dem das Material des Zylinders, der entlang wenigstens einer Achse einen Wärmeausdehnungskoeffizienten hat, der negativ oder im Wesentlichen Null ist, eines der folgenden Materialien ist:

- $\alpha$-$ZrMo_2O_8$ mit trigonaler Struktur,
- $HfMo_2O_8$,
- $\beta$-$(Zr_2O)(PO_4)_2$;
oder eine beliebige Zusammensetzung dieser Materialien.

6. Aktor nach einem der vorhergehenden Ansprüche, der an der Verbindungsstelle zwischen dem äußeren Zylinder (5, 5') und dem Führungszylinder (7, 7') wenigstens eine Festschmierstoffschicht (13) umfasst.

7. Aktor nach dem vorhergehenden Anspruch, bei dem der Festschmierstoff Graphitfluorid $(CF_x)_n$ ist, wobei x eine reelle Zahl ist, die den Grad der Fluoridierung darstellt, und n eine ganze Zahl ist, die den Grad der Polymerisation darstellt.

8. Aktor nach Anspruch 6, bei dem der Festschmierstoff folgendes ist:

- hexagonales Bornitrid,
- $MoS_2$,
- $WSe_2$
- $WS_2$,
- eingelagertes oder nicht eingelagertes Graphit,
- Zinnsulfid (in seinen Formen $SnS$, $SnS_2$, $Sn_3S_4$), und
- Ceriumfluorid $(CeF_3)$, oder
- eine beliebige Mischung dieser Materialien.

9. Aktor nach einem der vorhergehenden Ansprüche, bei dem der äußere Zylinder (5, 5') äußere Vorsprünge (10) umfasst, die sich radial zu dem Zylinder (5, 5') erstrecken.

10. Aktor nach einem der vorhergehenden Ansprüche, bei dem einer der beiden Zylinder (5, 5'/7, 7') einen oder mehrere Schlitze (11) umfasst, die sich im

FIG.1

FIG.2

FIG.3

FIG.4

FIG_5

FIG.6

FIG.7

FIG. 8

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2800028

- FR 2819468